# DEMANDE DE BREVET EUROPEEN

(11) **EP 4 491 387 A1**
(43) Date de publication de la demande: **15.01.2025**
(21) Numéro de dépôt: 24187844.6
(22) Date de dépôt: 10.07.2024
(51) Int. Cl.: B32B 5/02, B32B 27/12, B32B 27/26, B32B 27/28, B32B 27/32

(54) **TAPIS D HABILLAGE D'UN SOL DE VÉHICULE AUTOMOBILE**

(30) Priorité: 11.07.2023 FR 2307436
(71) Demandeur: TREVES Products, Services & Innovation, 92130 Issy-Les-Moulineaux (FR)
(72) Inventeur: LECOMTE, Alicia, 92130 Issy-Les-Moulineaux (FR); BONFILS, Xavier, 92130 Issy-Les-Moulineaux (FR); DELINSELLE, Eric, 92130 Issy-Les-Moulineaux (FR); RIBES, Stéphane, 92130 Issy-Les-Moulineaux (FR)
(74) Mandataire: Sayettat, Julien Christian

(57) **Abrégé**

L'invention concerne un tapis (1) d'habillage d'un sol de véhicule automobile, ledit tapis comprenant une couche textile (2) pourvue d'une face d'aspect (3), ladite face d'aspect étant recouverte par une feuille de protection (4) à base de matériau thermoplastique transparent ou translucide au travers de laquelle ladite couche textile est visible, ladite feuille étant à base d'un mélange d'élastomère thermoplastique oléfinique, de silicone greffé sur une polyoléfine et d'éthylène hexène copolymère. L'invention concerne également un procédé de réalisation d'un tel tapis (1).

## Description

L'invention concerne un tapis d'habillage d'un sol de véhicule automobile et un procédé de réalisation d'un tel tapis.

Il est connu de réaliser un tapis d'habillage d'un sol de véhicule automobile, ledit tapis comprenant une couche textile pourvue d'une face d'aspect, ladite face d'aspect étant recouverte par une feuille de protection à base de matériau thermoplastique transparent ou translucide au travers de laquelle ladite couche textile est visible, ladite feuille ayant été fixée par compression à ladite couche à température de ramollissement ou de fusion dudit matériau.

Avec un tel agencement, on dispose d'un tapis dont la couche textile est protégée de l'abrasion tout en restant visible à travers la feuille de protection, ce qui permet de conserver l'aspect fibreux de ladite couche, ledit tapis présentant en outre une bonne lavabilité.

Cependant, il est impératif que la feuille de protection réponde à un certain nombre d'exigences, et notamment une excellente résistance à l'abrasion, une masse et un coût minimisés, et également une brillance minimisée.

En outre, la feuille de protection doit présenter une excellente résistance à la lumière (notamment aux rayons UV) et aux cycles climatiques chaud/froid.

Un toucher « soyeux », une bonne aptitude au recyclage et une haute déformabilité et bonne souplesse facilitant son thermoformage sont également des qualités attendues d'une telle feuille de protection.

L'invention a pour but de proposer une feuille de protection dont la composition permette de répondre à ces multiples exigences.

A cet effet, et selon un premier aspect, l'invention propose un tapis d'habillage d'un sol de véhicule automobile, ledit tapis comprenant une couche textile pourvue d'une face d'aspect, ladite face d'aspect étant recouverte par une feuille de protection à base de matériau thermoplastique transparent ou translucide au travers de laquelle ladite couche textile est visible, ladite feuille ayant été fixée par compression à ladite couche à température de ramollissement ou de fusion dudit matériau, ladite feuille présentant la composition suivante :
- entre 75 et 90% en masse d'élastomère thermoplastique oléfinique (TPO), ledit élastomère présentant une dureté shore A comprise entre 75 et 95,
- entre 0,5 et 4% en masse de silicone greffé sur une polyoléfine, de manière à former une polyoléfine fonctionnelle incorporant des groupes fonctionnels de silicone,
- entre 10 et 20% en masse d'éthylène hexène copolymère.

L'utilisation d'une matrice en élastomère thermoplastique oléfinique (TPO) permet notamment de conférer à la feuille une excellente résistance à l'abrasion, ladite résistance étant accentuée par la présence du silicone greffé sur une polyoléfine, une telle résistance à l'abrasion permettant de prévoir une feuille de très fine épaisseur - notamment comprise entre 150 et 600 microns -, ce qui est favorable en termes de minimisation de la masse et du coût du tapis.

Quant à l'éthylène hexène copolymère, qui présente une bonne compatibilité avec l'élastomère thermoplastique oléfinique, il permet de réduire la brillance de la feuille, ce qui permet d'éviter généralement l'utilisation d'un vernis anti-brillance.

Par ailleurs, une feuille présentant une telle composition présente des qualités optimisées de résistance à la lumière (notamment aux rayons UV), de tenue aux cycles climatiques chaud/froid, d'aptitude au recyclage (du fait du caractère thermoplastique de ladite feuille), de haute déformabilité et bonne souplesse facilitant son thermoformage et également de toucher « soyeux »

Selon un deuxième aspect, l'invention propose un procédé de réalisation d'un tel tapis.

D'autres particularités et avantages de l'invention apparaîtront dans la description qui suit, faite en référence aux figures jointes, dans lesquelles :

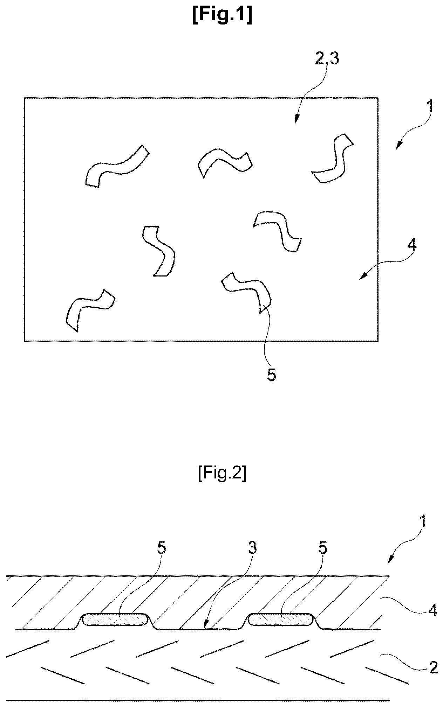

[Fig.1] est une vue schématique partielle de la face d'aspect d'un tapis selon une réalisation,
[Fig.2] est une vue schématique en coupe du tapis de la figure 1.

En référence aux figures, on décrit un tapis 1 d'habillage d'un sol de véhicule automobile, ledit tapis comprenant une couche textile 2 pourvue d'une face d'aspect 3, ladite face d'aspect étant recouverte par une feuille de protection 4 à base de matériau thermoplastique transparent ou translucide au travers de laquelle ladite couche textile est visible, ladite feuille ayant été fixée par compression à ladite couche à température de ramollissement ou de fusion dudit matériau, ladite feuille présentant la composition suivante :
- entre 75 et 90% - notamment entre 80 et 85% - en masse d'élastomère thermoplastique oléfinique (TPO), ledit élastomère présentant une dureté shore A comprise entre 75 et 95 (ladite dureté étant notamment mesurée selon la norme ISO 7619-1 : 2010 en vigueur à la date dépôt de la demande),
- entre 0,5 et 4% - notamment entre 1 et 2% - en masse de silicone greffé sur une polyoléfine, de manière à former une polyoléfine fonctionnelle incorporant des groupes fonctionnels de silicone (également dénommée SFPO (silicon containing fonctional polyoléfine)),
- entre 10 et 20% - notamment entre 13 et 17% - en masse d'éthylène hexène copolymère.

Selon une réalisation, la feuille 4 est pourvue d'un vernis ajouté pour limiter encore sa brillance si l'éthylène hexène copolymère n'apportait pas une matité suffisante.

Selon une réalisation, les groupes fonctionnels de silicone sont au moins en partie sous forme de groupes de polysiloxane.

Selon une réalisation, la feuille de protection 4 présente une épaisseur comprise entre 150 et 600 microns.

Selon une réalisation, la feuille de protection 4 présente une masse surfacique comprise entre 200 et 600 g/m².

Selon une réalisation, la feuille de protection 4 est pourvue de marquages décoratifs en relief, notamment sous forme de grainage.

Selon une réalisation, la feuille de protection 4 est pourvue d'un colorant permettant de garder son caractère transparent ou translucide.

Selon une réalisation, le tapis 1 comprend en outre des inclusions d'éléments décoratifs 5 disposées entre la couche textile 2 et la feuille de protection 4.

Selon une réalisation, les éléments décoratifs 5 sont à base de matériau thermoplastique, de fibres naturelles, etc.

Selon une réalisation, le matériau des éléments décoratifs 5 est à base de polyoléfine ayant été portée à température de ramollissement ou de fusion, de manière à assurer une adhésion optimale desdits éléments à la fois sur la couche textile 2 - notamment par accroche mécanique, les fibres de ladite couche textile s'incrustant superficiellement dans lesdits éléments - et sur la feuille de protection 4 - par accroche chimique, du fait de la nature analogue des matériaux constitutifs respectifs desdits éléments et de ladite feuille, et éventuellement par accroche mécanique, par interpénétration desdits éléments et de ladite feuille.

Les éléments décoratifs 5 peuvent être dispersés de façon ordonnée ou aléatoire et peuvent présenter des formes et/ou des couleurs diverses.

On peut ainsi agrémenter aisément l'aspect du tapis 1 par l'ajout des éléments décoratifs 5, ceci en cohérence avec la ligne esthétique recherchée.

Selon une réalisation, la couche textile 2 est un feutre aiguilleté ou encore un feutre dont les fibres ont été mélangées par de l'air pulsé (technologie « airlay »).

Selon une réalisation, la couche textile 2 présente une masse surfacique comprise entre 200 et 2 000 g/m².

Selon une réalisation non représentée, le tapis 1 comprend en outre une couche de découplage acoustique associée en face d'envers de la couche textile 2, ladite couche de découplage étant notamment à base de mousse élastiquement compressible ou de feutre.

On décrit à présent un procédé de réalisation d'un tel tapis 1, ledit procédé comprenant les étapes suivantes :
- prévoir une couche textile 2 - sur laquelle sont éventuellement dispersés des éléments décoratifs 5 -,
- recouvrir la face d'aspect de ladite couche par une feuille de protection 4 porté à température de ramollissement ou de fusion,
- comprimer ladite feuille sur ladite couche de manière à les associer entre elles.

Selon un premier mode de réalisation, la feuille de protection 4 est issue d'une extrusion sur la couche textile 2, ladite extrusion étant suivie d'un calandrage réalisant sa compression sur ladite couche.

Afin d'obtenir un tapis 1 tridimensionnel, il peut être prévu d'ajouter une étape finale de thermoformage de l'ensemble comprenant la couche textile 2 et la feuille de protection 4.

Selon un deuxième mode de réalisation, la feuille de protection 4 est disposée à température ambiante sur la couche textile 2, l'ensemble étant ensuite moulé par thermoformage réalisant une compression sur ladite couche de ladite feuille portée à température de ramollissement ou de fusion de son matériau constitutif.

## Revendications

1. Tapis (1) d'habillage d'un sol de véhicule automobile, ledit tapis comprenant une couche textile (2) pourvue d'une face d'aspect (3), ladite face d'aspect étant recouverte par une feuille de protection (4) à base de matériau thermoplastique transparent ou translucide au travers de laquelle ladite couche textile est visible, ladite feuille ayant été fixée par compression à ladite couche à température de ramollissement ou de fusion dudit matériau, ledit tapis étant **caractérisé en ce que** ladite feuille présente la composition suivante :
• entre 75 et 90% en masse d'élastomère thermoplastique oléfinique (TPO), ledit élastomère présentant une dureté shore A comprise entre 75 et 95,
• entre 0,5 et 4% en masse de silicone greffé sur une polyoléfine, de manière à former une polyoléfine fonctionnelle incorporant des groupes fonctionnels de silicone,
• entre 10 et 20% en masse d'éthylène hexène copolymère.

2. Tapis selon la revendication 1, **caractérisé en ce que** les groupes fonctionnels de silicone sont au moins en partie sous forme de groupes de polysiloxane.

3. Tapis selon l'une des revendications précédentes, **caractérisé en ce que** la feuille de protection (4) présente une épaisseur comprise entre 150 et 600 microns.

4. Tapis selon l'une quelconque des revendications précédentes, **caractérisé en ce que** la feuille de protection (4) est pourvue de marquages décoratifs en relief.

5. Tapis selon l'une quelconque des revendications précédentes, **caractérisé en ce que** la feuille de protection (4) est pourvue d'un colorant permettant de garder son caractère transparent ou translucide.

6. Tapis selon l'une quelconque des revendications précédentes, **caractérisé en ce qu'**il comprend en outre des inclusions d'éléments décoratifs (5) disposées entre la couche textile (2) et la feuille de protection (4).

7. Procédé de réalisation d'un tapis (1) selon l'une quelconque des revendications précédentes, **caractérisé en ce qu'**il comprend les étapes suivantes :
• prévoir une couche textile (2),
• recouvrir la face d'aspect de ladite couche par une feuille de protection (4) porté à température de ramollissement ou de fusion,
• comprimer ladite feuille sur ladite couche de manière à les associer entre elles.

8. Procédé selon la revendication 7, **caractérisé en ce que** la feuille de protection (4) est issue d'une extrusion sur la couche textile (2), ladite extrusion étant suivie d'un calandrage réalisant sa compression sur ladite couche.

9. Procédé selon la revendication 7, **caractérisé en ce que** la feuille de protection (4) est disposée à température ambiante sur la couche textile (2), l'ensemble étant ensuite moulé par thermoformage réalisant une compression sur ladite couche de ladite feuille portée à température de ramollissement ou de fusion de son matériau constitutif.
